# EUROPEAN PATENT SPECIFICATION

(11) **EP 3 194 181 B1**
(45) Date of publication and mention of the grant of the patent: **06.06.2018**
(21) Application number: 15760060.2
(22) Date of filing: 31.08.2015
(51) Int. Cl.: B60C 1/00

(54) **PROTECTIVE TIRE SIDEWALL COATING**
SCHUTZSCHICHT FÜR REIFENSEITENWÄNDE
REVÊTEMENT PROTECTEUR POUR FLANC DE PNEUMATIQUE

(30) Priority: 30.08.2014 US 201462044225 P
(43) Date of publication of application: 26.07.2017
(73) Proprietor: Compagnie Générale des Etablissements Michelin, 63000 Clermont-Ferrand (FR)
(72) Inventor: REVEL, John, Michael, Greenville, SC 29605 (US)
(74) Representative: Casalonga
(86) International application number: PCT/US2015/047744
(87) International publication number: WO 2016/033588

(56) References cited:
- EP-A1- 2 042 347
- WO-A1-2014/105488

## Description

### BACKGROUND OF THE INVENTION

### Field of the Invention

This invention relates generally to protective materials and more specifically, to protective coatings.

### Description of the Related Art

Today the tires and wheels that consumers install on their vehicles provide a decorative "look" that many consumers seek. They consider their tires and wheels to provide a decorative function to their vehicles and when they want their vehicles to look good, they want their tires and wheels to look good as well.

As is known in the art, some tires have chemicals that over time will discolor the tire surface and ruin the surface look of the tire. While this does not have a deleterious effect on the tire performance, it can lessen the decorative value of the tire to the consumer. It is often the antidegradants that migrate from within the rubber to the surface of the tire that stains or impairs the look of the tire.

Antidegradants are chemical that are added to the rubber to protect the rubber from chemical reactions that may occur, for example, with ozone that is found in the atmosphere. Such antidegradants may also be called antiozonants. A problem sought to be solved is the staining of the tire surfaces as these antidegradants migrate over time to the surface while still providing the protection to the tire from reactions with ozone.

### SUMMARY OF THE INVENTION

Particular embodiments of the present invention include tires having a sidewall that is covered with a protective coating. The protective coating may cover the exposed surface of one or both of the sidewalls and comprises a rubber composition that is based upon a cross-linkable elastomer composition that includes, per 100 parts by weight of rubber,), between 25 phr and 45 phr of natural rubber, between 25 phr and 45 phr of polybutadiene rubber and between 30 phr and 40 phr of EPDM. Additionally the rubber composition may include between 20 phr and 50 phr of carbon black and a curing system.

In particular embodiments, the curing system may be a peroxide curing system. In addition, the protective coating may be applied to the sidewall at a thickness of between 0.4 mm and 1 mm.

### BRIEF DESCRIPTION OF THE DRAWINGS

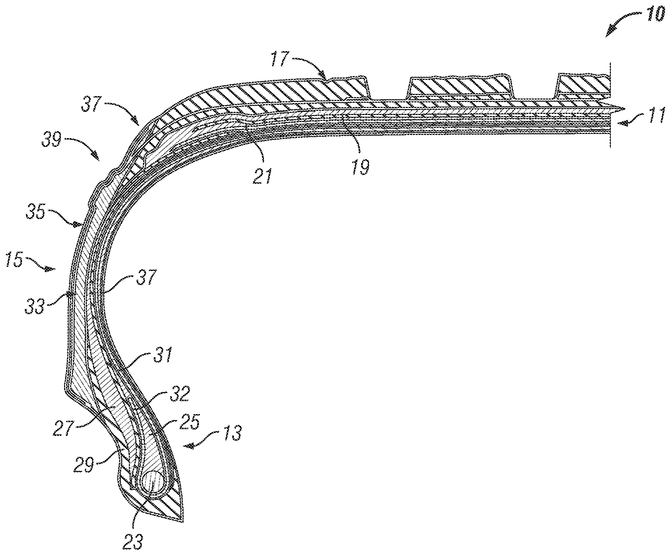

FIG. 1 is a partial sectional view of a pneumatic tire illustrating an embodiment of a protective coating on the sidewalls.

### DETAILED DESCRIPTION OF PARTICULAR EMBODIMENTS

Particular embodiments of the present invention include tires having sidewalls covered with a protective coating that is ozone attack proof and that protects the underlying sidewalls from ozone attack. The protective coating does not include any of the typical staining antiozonants that tend to discolor the sidewall over time. Instead the elastomers selected for the coating are themselves resistant to ozone attack and therefore the addition of antiozonants to the protective coating composition is not necessary. Advantageously, the protective coating maintains its black appearance over time so that the tire "look" does not diminish over the life of the tire. In particular embodiments the antiozonants may also be removed from the underlying sidewall composition since it is covered by the protective coating and is no longer exposed to ozone from the atmosphere.

As used herein, "phr" is "parts per hundred parts of rubber by weight" and is a common measurement in the art wherein components of a rubber composition are measured relative to the total weight of rubber in the composition, i.e., parts by weight of the component per 100 parts by eight of the total rubber(s) in the composition.

As used herein, "elastomer" or "elastomeric compositions" refers to any polymer or composition of polymers (such as blends of polymers) that exhibit the properties of rubber and therefore the terms "elastomer" and "rubber" may be used interchangeably herein.

As used herein, "based upon" is a term recognizing that embodiments of the present invention are made of a vulcanized or cured rubber composition that were, at the time of their assembly, uncured. The cured rubber composition is therefore "based upon" the uncured rubber composition. In other words, the cross-linked rubber composition is based upon or comprises the constituents of the cross-linkable rubber composition.

FIG. **1** is a partial sectional view of a pneumatic tire illustrating an embodiment of a protective coating on the sidewalls. As those skilled in the art will readily understand, the tire shown is merely an example of a tire having a sidewall and this illustration of a protective layer on a tire is not meant to limit the invention only to tires similar to the one pictured.

The tire **10** includes a crown section **11,** a bead section **13** and a sidewall section **15.** The tire has a tread **17** for contacting the road surface. The tread **17** is supported by the crown section **11** that is positioned radially-inward of the tread **11,** the crown **11** having a belt package **19** to stiffen the casing and to provide improved wear and handling response. The crown section **11** also includes an undertread portion **21** that provides cushioning and protection to the belt package.

The pair of bead sections **13** (only one is shown in the partial view) are arranged to face each other in the tire width or axial direction. The bead section **13** includes the bead **23** which is an inextensible bead core that anchors the plies and locks the tire onto a wheel assembly. It further includes the apex **25** that is the bead filler as well as a stiffener **27** and a toe guard **29.** The toe guard **29** provides protection to the bead section **12** and provides the external surface of the bead section.

The pneumatic tire **10** further includes a carcass ply **31.** The carcass ply **31** extends between the beads **23** of the tire **10** and terminates in a pair of carcass layer ends **32.** The carcass ply **31** therefore extends from one bead **23** through one sidewall section **15,** through the crown section **11** and through the other sidewall section **15** to the other bead **23.** Each carcass layer end **32** is formed by wrapping the carcass ply **31** around one of the beads **23** and then terminating it. The apex **23,** made of a harder rubber composition, is positioned radially-outward of each bead **23** and separates the carcass ply **31** from the carcass layer ends **32.**

Typically, the carcass ply **31** is constructed from a plurality of mutually parallel textile or metal cords embedded in an elastomeric matrix, such as a thin layer of a rubber composition. As known to one having ordinary skill in the art, the carcass ply **31** is typically formed using a calendering process wherein the cords are laid parallel to each other and encased in the elastomeric matrix. The carcass ply **31** is then arranged in a manner such that the cords are typically oriented in a radial direction along the sidewalls **15** of the tire **10.** More specifically, along the sidewalls **15** of the tire **10,** the cords of the carcass ply **31** are substantially perpendicular to the axis of rotation of tire.

The sidewalls section **15** includes the sidewalls **33** that extend in a direction radially-inward from an axial edge **37** of the crown section **11** extending towards the bead section **13.** The shoulder region **39** of the tire **10** is formed in the upper portion of the sidewall **33.** The sidewalls **33** define a side of the tire and they cover that portion of the carcass ply **31** that passes through the sidewall section **15,** either directly or with another tire constituent between them. As shown in FIG. **10,** the sidewall **33** may cover at least a portion of the tread **17** and/or may cover at least a portion of the toe guard **29.** However, as those skilled in the art understand, the tire constituents may be arranged in a way so that the sidewall does not cover them.

The tire **10** further may include an inner liner **37,** which forms an inner surface of the tire and inhibits the passage of the inflating gas through the tire **10.**

The protective coating **35** covers the exposed outer surface of the sidewalls **33** providing a barrier between the sidewalls **35** and the environment. With the protective coating in place, ozone cannot contact the sidewall **35** surface and therefore the protective coating **35** protects the sidewalls **35** from ozone cracking.

The protective coating is a rubber composition that is placed over the sidewalls during the tire building process by, for example, an extrusion or calendering step. When the tire is cured, the protective coating is also cured along with the tire.

In particular embodiments, the rubber composition that forms the protective coating includes a mixture of natural rubber (NR), polybutadiene rubber (BR) and EPDM rubber.

EPDM rubber is a well-known rubber that is a terpolymer of ethylene, propylene and a diene component. EPDM is known to be particularly useful as being resistant to ozone attack. The ethylene content of the EPDM rubber is typically in the range of between 45 mole % and 85 mole %. Higher ethylene content provides for better mixing and better extrusion properties of the rubber. Useful EPDM is available from Exxon.

Polybutadiene is a well-known rubber that is a highly unsaturated rubber formed by the polymerization of 1,3-butadiene, a conjugated hydrocarbon. Because of the double bonds in the monomer, BR is made up of three forms: *cis*-1,4, *trans*-1,4 and *vinyl*-1,2. Although not meant to limit the invention, polybutadienes for particular embodiments of the rubber composition may be those having a content of cis-1,4-units of greater than 80%.

As noted above, particular embodiments of the rubber composition that forms the protective coating include natural rubber, polybutadiene and EPDM. Too little EPDM will result in a protective coating that is not adequate for protecting the tire sidewalls from ozone attack and too much EPDM will result in a mixture that lacks adequate adhesion.

The amount of natural rubber used in particular embodiments of the rubber composition is between 25 phr and 45 phr or alternatively between 30 phr and 40 phr of natural rubber. The amount of BR used in particular embodiments is between 25 phr and 45 phr or alternatively between 30 phr and 40 phr of BR.

EPDM may be classified as being essentially saturated diene elastomers. Such elastomers have low or very low content of units of diene origin (conjugated dienes) having such content of less than 15 mole %. Particular embodiments of the rubber composition making up the protective coating include, in addition to the NR and BR, between 30 phr and 40 phr of EPDM.

In addition to the elastomer component of the rubber composition forming the protective coating, the rubber composition may further include a filler. Carbon black, which is an organic filler, is well known to those having ordinary skill in the rubber compounding field. The carbon black may, in particular embodiments for example, be included in an amount of between 20 phr and 50 phr or alternatively between 30 phr and 40 phr.

Suitable carbon blacks are any carbon blacks known in the art and suitable for the given purpose. Non-limitative examples of carbon blacks include, for example, the 600 series of carbon blacks, including but not limited to N630, N650 and N660 carbon blacks and the 700 series of carbon blacks, including but not limited to N762, N772 and N787.

In addition to the rubber and filler constituents, the rubber composition that forms the protective coating may further include a plasticizing system. The plasticizing system may provide both an improvement to the processability of the rubber composition and a means for adjusting the some of the physical characteristics of the cured rubber composition. Plasticizing systems are well known and can include processing oils, resins or combinations thereof. Processing oils are plasticizers that are liquid at room temperature (23 °C) while resins are plasticizers that are solids at room temperature. Oils are generally divided into petroleum based oils and vegetable oils. Petroleum based oils are generally extracted from petroleum and are classified as being paraffinic, aromatic or naphthenic type processing oil, including MES and TDAE oils. Other oils useful as plasticizers include, for example, vegetable oils for which sunflower and rapeseed oils are exemplary. Well known resins include for example polyterpene resins and polylimonene resins.

The amount of plasticizer added to the rubber composition may be between 10 phr and 30 phr or alternatively between 10 phr and 20 phr. In particular embodiments the plasticizer is a petroleum based oil.

Since the sidewall layer is covered with the protective coating, advantageously the staining chemicals that protect the sidewall from ozone cracking can be deleted from the underlying sidewall materials which are manufactured from rubber compositions that are well known in the art. Therefore there is no requirement to teach such rubber compositions herein. Such staining compositions are well known in the industry and include those having an amine moiety. Examples of such compounds include N,N-(1,4-dimethylpentyl)-p-phenylenediamine (77PD), N-isopropyl-N-phenyl-p-phenylene-diamine (IPPD), N-1,3-Dimethylbutyl-N-phenyl-p-phenylenediamine (6PPD), and N,N- Diphenyl-p-phenylenediamine (DPPD). Therefore embodiments of the present invention may include tires having a sidewall covered by the disclosed protective coating, wherein the sidewall contains no staining antiozonants.

In particular embodiments of tires disclosed herein, the protective coating may be applied both an outer tire side of the sidewall and an inner tire side of the sidewall. The outer tire side of the sidewall is the side of the tire that is seen when the tire is mounted on a vehicle while the inner tire side of the sidewall is the opposite side of the tire, which is typically not seen when the tire is mounted on the vehicle. Since the protective coating protects the tire from ozone attack, it is advantageous that both sides of the tire have the protective coating applied to the sidewalls.

The rubber compositions disclosed herein useful as a protective coating may be cured with any suitable curing system including a peroxide curing system or a sulfur curing system or both. Particular embodiments are cured with a sulfur curing system that includes free sulfur and may further include, for example, one or more of accelerators, stearic acid and zinc oxide. Suitable free sulfur includes, for example, pulverized sulfur, rubber maker's sulfur, commercial sulfur, and insoluble sulfur. The amount of free sulfur included in the rubber composition is not limited and may range, for example, between 0.5 phr and 10 phr or alternatively between 0.5 phr and 5 phr or between 0.5 phr and 3 phr. Particular embodiments may include no free sulfur added in the curing system but instead include sulfur donors.

Accelerators are used to control the time and/or temperature required for vulcanization and to improve the properties of the cured rubber composition. Particular embodiments of the present invention include one or more accelerators. One example of a suitable primary accelerator useful in the present invention is a sulfenamide. Examples of suitable sulfenamide accelerators include n-cyclohexyl -2-benzothiazole sulfenamide (CBS), N-tert-butyl-2-benzothiazole Sulfenamide (TBBS), N-Oxydiethyl-2-benzthiazolsulfenamid (MBS) and N'-dicyclohexyl-2-benzothiazolesulfenamide (DCBS). Combinations of accelerators are often useful to improve the properties of the cured rubber composition and the particular embodiments include the addition of secondary accelerators.

Particular embodiments may include as a secondary accelerant the use of a moderately fast accelerator such as, for example, diphenylguanidine (DPG), triphenyl guanidine (TPG), diorthotolyl guanidine (DOTG), o-tolylbigaunide (OTBG) or hexamethylene tetramine (HMTA). Such accelerators may be added in an amount of up to 4 phr, between 0.5 and 3 phr, between 0.5 and 2.5 phr or between 1 and 2 phr. Particular embodiments may exclude the use of fast accelerators and/or ultra-fast accelerators such as, for example, the fast accelerators: disulfides and benzothiazoles; and the ultra-accelerators: thiurams, xanthates, dithiocarbamates and dithiophosphates.

A peroxide curing system may include an organic peroxide as a peroxide curing agent, examples of which may include di-cumyl peroxide; tert-butyl cumyl peroxide; 2,5-dimethyl-2,5 bis(tert-butyl peroxy)hexyne-3; bis(tert-butyl peroxy isopropyl)benzene; n-butyl 4,4'-di(tert-butyl peroxy) valerate; 1,1-di-tert-butylperoxy-3,3,5-- trimethylcyclohexane; bis-(tert-butyl peroxy)-diisopropyl benzene; t-butyl perbenzoate; di-tert-butyl peroxide; 2,5-dimethyl-2,5-di-tert-butylperoxide hexane and combinations thereof.

The amount of peroxide curing agent useful in particular embodiments of a cushion gum depends, as known to one having ordinary skill in the art, upon the elastomer and coagent loading utilized. In general, such amounts of peroxide curing agent may be between about 0.1 pounds per hundred weight of elastomer (phr) and about 10 phr. Particular embodiments may utilize the peroxide at between about 0.1 phr and about 5 phr or alternatively, between about 0.5 and about 3.5 phr.

Other additives can be added to the rubber compositions disclosed herein as known in the art. Such additives may include, for example, some or all of the following: antidegradants, antioxidants, stearic acid and zinc oxide. Examples of antidegradants and antioxidants include TMQ and may be added to rubber compositions in an amount, for example, of from 0.5 phr and 7 phr. Zinc oxide may be added in an amount, for example, of between 1 phr and 6 phr or alternatively, of between 2 phr and 5 phr. Particular embodiments include no waxes or staining antidegradants since the protective coating should not include any components that would bloom or otherwise degrade the surface by staining.

The rubber compositions that are embodiments of the present invention may be produced in suitable mixers, in a manner known to those having ordinary skill in the art, typically using two successive preparation phases, a first phase of thermo-mechanical working at high temperature, followed by a second phase of mechanical working at lower temperature.

The first phase of thermo-mechanical working (sometimes referred to as "non-productive" phase) is intended to mix thoroughly, by kneading, the various ingredients of the composition, with the exception of the vulcanization system. It is carried out in a suitable kneading device, such as an internal mixer or an extruder, until, under the action of the mechanical working and the high shearing imposed on the mixture, a maximum temperature generally between 120° C and 190° C is reached.

After cooling of the mixture, a second phase of mechanical working is implemented at a lower temperature. Sometimes referred to as "productive" phase, this finishing phase consists of incorporating by mixing the vulcanization (or cross-linking) system (sulfur, peroxide or combinations and accelerator(s)), in a suitable device, for example an open mill. It is performed for an appropriate time (typically for example between 1 and 30 minutes) and at a sufficiently low temperature lower than the vulcanization temperature of the mixture, so as to protect against premature vulcanization.

The invention is further illustrated by the following examples, which are to be regarded only as illustrations and not delimitative of the invention in any way. The properties of the compositions disclosed in the examples were evaluated as described below.

Static ozone testing was conducted with 20 x 145 mm samples cut from a plaque and folded over so that the ends were flush. The sample was then stapled 25 mm from the ends to form a loop and placed over a 25 mm diameter rod. The specimen was hung for a period for 2 to 5 days in a normal lab atmosphere and then placed in an ozone test chamber for 14 days. Severity of cracking was then evaluated.

Dynamic ozone testing was conducted with 20 x 145 mm samples cut from a plaque and clamped in holders such that a 20 x 50 mm test area was exposed between the holders. The holders were mounted in an ozone test chamber; the samples elongated 25% and then relaxed at a rate of 30 cycles per minute for a duration of 2 days. Severity of cracking was then evaluated on a scale of 0 to 5, 0 being no cracking.

Stressed ozone cracking, another static test method, was conducted with rubber strips that were placed in an ozone test chamber and placed under stress by stretching the samples over a frame over a three day period, with the stress being increased in increments up to 110%.

### Example 1

A rubber composition was prepared using the components shown in Table 1. The amount of each component making up the rubber composition shown in Table 1 are provided in parts per hundred per parts of rubber by weight (phr).

**Table 1 - Rubber Formulation**

| Formulations | W**1** | F**1** |
|---|---|---|
| NR | 35 | 35 |
| BR | 65 | 30 |
| EPDM | | 35 |
| Carbon Black | 60 | 35 |
| Oil | 19 | 15 |
| Stearic Acid | 1 | 1 |
| Zinc Oxide | 2.4 | 4 |
| TMQ | 1 | 1 |
| Polyethylene glycol | | 3 |
| 6ppd | 3 | |
| wax | 1.5 | |
| peroxide | | 2.8 |
| sulfur | 1.4 | 1.2 |
| accelerator | 1.4 | 0.7 |

| Test Results | | |
|---|---|---|
| Static ozone test | 0 | 0 |
| Stressed ozone test | 50% | 0 |
| Dynamic ozone test | 1 | 0 |

The polybutadiene was a high-cis BR having a glass transition temperature of around -65 °C. The EPDM was an Exxon product having the trade name VISTALON 5600. The carbon black was an N762 black for F1 and N650 for W1. The oil was a paraffinic oil for F1 and a naphthenic oil for W1.

The TMQ is the well-known antioxidant 2,3,4- trimethyl-1,2-dihydroquyinoline. The peroxide, bis-(tert-butyl peroxy)-diisopropyl benzene, was VUP-CUP available from Arkema. The accelerator was a sulfonamide accelerator.

After mixing by the method described earlier, the material can be extruded to a thickness of about 0.8 mm and applied as a protective coating to the sidewalls of the tire as it is being built. The protective coating is then cured along with the tire in a manner well known in the art.

The protective coating was tested for its ozone resistance. The compositions shown in Table 1 were mixed and cured and then tested for both dynamic ozone testing and static ozone testing as described above. As can be seen in Table 1, for the static ozone testing over the 18 mm rod, no ozone cracking occurred either in the witness nor the inventive formulation. In the stressed ozone test, the witness formulation started to crack with the stress at 50% but the inventive formulation F1 had no ozone cracking. In the dynamic ozone testing, the witness formulation exhibited cracking while the inventive formulation F1 had no ozone cracking.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

It should be understood from the foregoing description that various modifications and changes may be made to the embodiments of the present invention without departing from its true spirit. The foregoing description is provided for the purpose of illustration only and should not be construed in a limiting sense. Only the language of the following claims should limit the scope of this invention.

## Claims

1. A tire, comprising:
a tread supported by a crown, the crown being positioned radially inward of the tread, the crown including a belt package, each positioned radially inward of the tread;
a pair of bead sections arranged to face each other in a tire width direction, each bead section including a circumferentially-inextensible bead core and a toe guard that forms an external surface of the bead section;
a carcass layer constructed from a plurality of radially-oriented carcass layer cords embedded in an elastomeric matrix and extending through the crown and between the beads, the carcass layer ends being anchored in the pair of bead cores;
a pair of sidewalls, each sidewall extending radially-inward from an axial edge of the crown and extending toward the bead section, each sidewall defining a side of the tire, wherein the sidewall covers that portion of the carcass layer extending from the crown section to the bead section and is formed of a sidewall material; and
a protective coating covering an exposed surface of at least one of the pair of sidewalls, wherein the protective coating comprises a rubber composition that is based upon a cross-linkable elastomer composition, the cross-linkable elastomer composition comprising, per 100 parts by weight of rubber (phr):
between 25 phr and 45 phr of natural rubber;
between 25 phr and 45 phr of polybutadiene rubber;
between 30 phr and 40 phr of EPDM;
between 20 phr and 50 phr of carbon black; and
a curing system.

2. The tire of claim 1, wherein the protective coating is applied to the tire with a thickness of between 0.5 mm and 1.1 mm.

3. The tire of claim 2, wherein the protective coating is applied to the tire with a thickness of between 0.7 mm and 0.9 mm.

4. The tire of any one of the preceding claims, wherein the protective coating on the tire after curing is between 0.4 mm and 1 mm thick.

5. The tire of any one of the preceding claims, wherein the protective coating on the tire after curing is between 0.5 mm and 0.8 mm thick.

6. The tire of any one of the preceding claims, wherein the sidewall covers at least a portion of the axial end of the tread, at least a portion of the toe guard or both.

7. The tire of any one of the preceding claims, wherein the protective coating is applied to both an outer tire side of the sidewall and an inner tire side of the sidewall.

8. The tire of any one of the preceding claims, wherein the cross-linkable elastomer composition comprises between 30 phr and 40 phr of the natural rubber.

9. The tire of any one of the preceding claims, wherein the cross-linkable elastomer composition comprises between 30 phr and 40 phr of the polybutadiene rubber.

10. The tire of any one of the preceding claims, wherein the cross-linkable elastomer composition comprises between 30 phr and 40 phr of the carbon black.

11. The tire of any one of the preceding claims, wherein the sidewall material contains no staining antiozonant.

## Patentansprüche

1. Reifen, umfassend:
eine Lauffläche, die von einer Krone getragen wird, wobei die Krone radial einwärts der Lauffläche positioniert ist, wobei die Krone ein Gürtelpaket aufweist, das jeweils radial einwärts der Lauffläche positioniert ist;
ein Paar Wulstabschnitte, die in Breitenrichtung des Reifens einander gegenüberliegend angeordnet sind, wobei jeder Wulstabschnitt einen in Umfangsrichtung nicht dehnbaren Wulstkern und einen Spurschützer aufweist, der eine Außenfläche des Wulstabschnitts bildet;
eine Karkassenschicht, die aus einer Vielzahl von radial ausgerichteten Karkassenschichtkorden aufgebaut ist, die in eine elastomere Matrix eingebettet sind und sich durch die Krone und zwischen den Wülsten erstrecken, wobei die Enden der Karkassenschicht in den beiden Wulstkernen verankert sind;
ein Paar Seitenwände, wobei sich jede Seitenwand von einem axialen Rand der Krone radial einwärts erstreckt und sich in Richtung zu dem Wulstabschnitt erstreckt, wobei jede Seitenwand eine Seite des Reifens definiert, wobei die Seitenwand denjenigen Abschnitt der Karkassenschicht bedeckt, der sich von dem Kronenabschnitt zu dem Wulstabschnitt erstreckt und aus einem Seitenwandmaterial gebildet ist; und
eine Schutzschicht, die eine freiliegende Fläche mindestens einer der beiden Seitenwände bedeckt, wobei die Schutzschicht eine Kautschukzusammensetzung umfasst, die auf einer vernetzbaren Elastomerzusammensetzung basiert, wobei die vernetzbare Elastomerzusammensetzung pro 100 Gewichtsteile Kautschuk (phr) Folgendes umfasst:
zwischen 25 phr und 45 phr Naturkautschuk;
zwischen 25 phr und 45 phr Polybutadienkautschuk;
zwischen 30 phr und 40 phr EPDM;
zwischen 20 phr und 50 phr Ruß; und
ein Härtungssystem.

2. Reifen nach Anspruch 1, wobei die Schutzschicht mit einer Dicke zwischen 0,5 mm und 1,1 mm auf den Reifen aufgebracht wird.

3. Reifen nach Anspruch 2, wobei die Schutzschicht mit einer Dicke zwischen 0,7 mm und 0,9 mm auf den Reifen aufgebracht wird.

4. Reifen nach einem der vorhergehenden Ansprüche, wobei die Schutzschicht auf dem Reifen nach dem Härten zwischen 0,4 mm und 1 mm dick ist.

5. Reifen nach einem der vorhergehenden Ansprüche, wobei die Schutzschicht auf dem Reifen nach dem Härten zwischen 0,5 mm und 0,8 mm dick ist.

6. Reifen nach einem der vorhergehenden Ansprüche, wobei die Seitenwand mindestens einen Abschnitt des axialen Endes des Reifens, mindestens einen Abschnitt des Spurschützers oder beides bedeckt.

7. Reifen nach einem der vorhergehenden Ansprüche, wobei die Schutzschicht sowohl auf eine Reifenaußenseite der Seitenwand als auch auf eine Reifeninnenseite der Seitenwand aufgebracht ist.

8. Reifen nach einem der vorhergehenden Ansprüche, wobei die vernetzbare Elastomerzusammensetzung zwischen 30 phr und 40 phr Naturkautschuk umfasst.

9. Reifen nach einem der vorhergehenden Ansprüche, wobei die vernetzbare Elastomerzusammensetzung zwischen 30 phr und 40 phr Polybutadienkautschuk umfasst.

10. Reifen nach einem der vorhergehenden Ansprüche, wobei die vernetzbare Elastomerzusammensetzung zwischen 30 phr und 40 phr Ruß umfasst.

11. Reifen nach einem der vorhergehenden Ansprüche, wobei das Seitenwandmaterial kein abfärbendes Ozonschutzmittel enthält.

## Revendications

1. Pneumatique, comprenant :
une bande de roulement portée par un sommet, le sommet étant placé radialement à l'intérieur par rapport à la bande de roulement, le sommet comportant un ensemble de ceinture dont les éléments sont chacun placés radialement à l'intérieur par rapport à la bande de roulement ;
une paire de parties formant talons disposées pour se faire face dans le sens de la largeur du pneumatique, chaque partie formant talon comportant une tringle, circonférentiellement inextensible, et une protection de talon qui forme une surface externe de la partie formant talon ;
une nappe carcasse constituée d'une pluralité de câbles de nappe carcasse orientés radialement et noyés dans une matrice élastomère et s'étendant à travers le sommet et entre les talons, les extrémités de la nappe carcasse étant ancrées dans la paire de tringles ;
une paire de flancs, chaque flanc s'étendant radialement vers l'intérieur, à partir d'un bord axial du sommet, et s'étendant en direction de la partie formant talon, chaque flanc définissant un côté du pneumatique, sachant que le flanc recouvre la partie de la nappe carcasse qui s'étend de la partie formant sommet à la partie formant talon, et est constitué d'un matériau de flanc ; et
un revêtement protecteur recouvrant une surface exposée d'au moins un flanc de la paire de flancs, le revêtement protecteur comprenant une composition à base de caoutchouc qui est basée sur une composition élastomère susceptible d'être réticulée, la composition élastomère susceptible d'être réticulée comportant, par 100 parties en poids de caoutchouc :
entre 25 phr et 45 phr de caoutchouc naturel ;
entre 25 phr et 45 phr de caoutchouc polybutadiène ;
entre 30 phr et 40 phr de EPDM ;
entre 20 phr et 50 phr de noir de carbone ; et
un système de vulcanisation.

2. Pneumatique selon la revendication 1, dans lequel le revêtement protecteur est appliqué sur le pneumatique en une épaisseur comprise entre 0,5 mm et 1,1 mm.

3. Pneumatique selon la revendication 2, dans lequel le revêtement protecteur est appliqué sur le pneumatique en une épaisseur comprise entre 0,7 mm et 0,9 mm.

4. Pneumatique selon l'une quelconque des revendications précédentes, dans lequel le revêtement protecteur sur le pneumatique, après la vulcanisation, présente une épaisseur comprise entre 0,4 mm et 1 mm.

5. Pneumatique selon l'une quelconque des revendications précédentes, dans lequel le revêtement protecteur sur le pneumatique, après la vulcanisation, présente une épaisseur comprise entre 0,5 mm et 0,8 mm.

6. Pneumatique selon l'une quelconque des revendications précédentes, dans lequel le flanc recouvre au moins une partie de l'extrémité axiale de la bande de roulement, au moins une partie de la protection de talon, ou les deux.

7. Pneumatique selon l'une quelconque des revendications précédentes, dans lequel le revêtement protecteur est appliqué à la fois sur un côté extérieur de pneumatique du flanc et sur un côté intérieur de pneumatique du flanc.

8. Pneumatique selon l'une quelconque des revendications précédentes, dans lequel la composition à base d'élastomère susceptible d'être réticulée comporte entre 30 phr et 40 phr du caoutchouc naturel.

9. Pneumatique selon l'une quelconque des revendications précédentes, dans lequel la composition à base d'élastomère susceptible d'être réticulée comporte entre 30 phr et 40 phr du caoutchouc polybutadiène.

10. Pneumatique selon l'une quelconque des revendications précédentes, dans lequel la composition à base d'élastomère susceptible d'être réticulée comporte entre 30 phr et 40 phr du noir de carbone.

11. Pneumatique selon l'une quelconque des revendications précédentes, dans lequel le matériau du flanc ne contient pas d'antiozonant provoquant une coloration.
